# EUROPEAN PATENT APPLICATION

(11) **EP 4 067 695 A2**
(43) Date of publication of application: **05.10.2022**
(21) Application number: 22164786.0
(22) Date of filing: 28.03.2022
(51) Int. Cl.: F16H 1/00, F16H 1/22, F16H 3/34, F16H 3/40, F16H 37/04

(54) **MOTOR GEARBOX**

(30) Priority: 29.03.2021 CN 202120640138 U; 29.03.2021 CN 202120639305 U
(71) Applicant: Shenzhen Oceanwing Smart Innovations Technology Co., Ltd, Nanshan District Shenzhen Guangdong (CN)
(72) Inventor: DEZHOU, Chang, Nanshan District, Guangdong Province Shenzhen City (CN); RUIRI, Huang, Nanshan District, Guangdong Province Shenzhen City (CN); DANDONG, Zheng, Nanshan District, Guangdong Province Shenzhen City (CN)
(74) Representative: Bittner, Thomas L.

(57) **Abstract**

The present application provides a motor gearbox used in, for example, a smart door lock. The gearbox may comprise a housing, a motor disposed in the housing, a gearbox output shaft disposed in the housing; and a clutch mechanism comprising a main gear and a planetary gear meshing with the main gear. The main gear may be connected and driven by the motor, and the planetary gear may be selectively connected to the gearbox output shaft when the motor drives the main gear to rotate. When the main gear is rotating, the planetary gear may move in a circumferential direction of the main gear. (Fig. 5)

## Description

This application relates to the technical field of drive mechanisms, and in particular to a motor gearbox.

### Background

The motor gearbox of a smart door lock on the market is usually designed with a gear clutch mechanism, which is used to connect or disconnect the motor and the lock. Particularly, if the lock needs to be opened and closed mechanically, the connection between the motor and the lock needs to be disconnected.

However, the design of the current gear clutch mechanism is unreasonable and unstable, resulting in poor clutch smoothness of the gears.

### Summary

It is an object to provide an improved motor gearbox that improves the smoothness of a gear clutch mechanism.

For solving the object, a motor gearbox of claim 1 is provided. Further, a motor gearbox of claim 10 is provided.

The present application provides a motor gearbox. The motor gearbox may comprise: a housing, a motor disposed in the housing, a gearbox output shaft disposed in the housing; and a clutch mechanism comprising a main gear and a planetary gear meshing with the main gear. The main gear may be connected and driven by the motor, and the planetary gear may be selectively connected to the gearbox output shaft when the motor drives the main gear to rotate, in response to the main gear rotating, the planetary gear may move in a circumferential direction of the main gear.

The planetary gear may comprise a first planetary gear and a second planetary gear spaced apart from each other along the circumference of the main gear. When the main gear is rotated in a first rotational direction, the first planetary gear may be connected to the gearbox output shaft. When the main gear is rotated in a second rotational direction, the second planetary gear may be connected to the gearbox output shaft. The first rotation direction and the second rotation direction may be different (e.g., opposite to each other).

The clutch mechanism may further comprise a main gear shaft configured to set the main gear; a support member rotatably connected to the main gear shaft; and a planetary gear shaft configured to set the planetary gear. The planetary gear shaft may be provided on the support member, and the planetary gear may be rotatable with respect to the planetary gear shaft.

The clutch mechanism may comprise a clutch resilient member clamped between the planetary gear and the support member. The clutch resilient member may be in a compressed state.

The support member may comprise an interconnected first support member and a second support member. The first and second support members may be rotatably connected at their joints to the main gear shaft. The planetary gear may comprise a first planetary gear and a second planetary gear spaced apart from each other along the circumference of the main gear. The first planetary gear may be provided in the first support portion; and the second planetary gear may be provided in the second support portion.

The motor gearbox may comprise a first drive gear, and the first planetary gear and the second planetary gear may be connected by the first drive gear and the gearbox output shaft. The first support section may be set at a predetermined angle between an extending direction of the first support section and an extending direction of the second support section. The predetermined angle may be less than 180°, and the space between the first support portion and the second support portion may face the first drive gear.

The main gear may comprise a first gear section and a second gear section arranged coaxially. The first and second gear sections may be capable of simultaneous rotation. For example, the first gear section may be connected to and driven by the motor, and the second gear section may be engaged with the planetary gear.

The motor gearbox may comprise a plugging protection mechanism (e.g., blocking protection mechanism). The plugging protection mechanism may comprise a first protection gear connected to and driven by the motor and a second protective gear provided coaxially with the first protective gear. The second protective gear may be connected to and driven by the gearbox output shaft. The plugging protection mechanism may further comprise a protective resilient member clamped between the first protective gear and the second protective gear, and the protective resilient member may be in a compressed state.

The motor gearbox may comprise a second drive gear disposed on the gearbox output shaft. The second drive gear may be fixed with respect to the gearbox output shaft, and the second drive gear may be connected to the planetary gear.

The motor gearbox may comprise a worm connected to an output end of the motor, and a third drive gear connected to the worm gear and the main gear respectively.

A motor gearbox may comprise a clutch mechanism. The clutch mechanism of the motor gearbox may comprise a main gear and a planetary gear. The main gear and the planetary gear may mesh with each other, and the planetary gear can move along the circumference of the main gear with the rotation of the main gear. During the rotation of the main gear driven by the motor, the planetary gear can be selectively connected to the output shaft of the gearbox, e.g., the planetary gear can be connected and/or disconnected from the output shaft of the gearbox with its movement along the circumference of the main gear. This application can make the clutching process of planetary gear and gearbox output shaft smoother and avoid jamming.

A motor gearbox may be provided, comprising: a housing; a motor disposed in the housing; a gearbox output shaft disposed in the housing; a main gear connected to the motor; and a planetary gear meshing with the main gear; wherein the planetary gear comprises a first planetary gear and a second planetary gear spaced apart from each other along a circumferential direction of the main gear; wherein, when the main gear is rotated in a first rotational direction, the first planetary gear is connected to the gearbox output shaft; and wherein, when the main gear is rotated in a second rotational direction opposite to the first rotation direction, the second planetary gear is connected to the gearbox output shaft.

The motor gearbox may further comprise: a main gear shaft configured to set the main gear; a support rotatably connected to the main gear shaft; and a planetary gear shaft configured to set the planetary gear; wherein the planetary gear shaft is provided on the support, and the planetary gear is rotatable with respect to the planetary gear shaft.

The motor gearbox may further comprise a clutch resilient device clamped between the planetary gear and the support, wherein the clutch resilient device is in a compressed state.

The following may be provided: the support comprises an interconnected first support portion and a second support portion, the first and second support portions are rotatably connected to the main gear shaft; the planetary gear comprises a first planetary gear and a second planetary gear spaced apart from each other along the circumference of the main gear; the first planetary gear is provided in the first support portion; and the second planetary gear is provided in the second support portion.

For the motor gearbox, the following may be provided: the motor gearbox comprises a first drive gear, the first planetary gear and the second planetary gear are connected by the first drive gear and the gearbox output shaft; the first support portion is set at a predetermined angle between an extending direction of the first support portion and an extending direction of the second support portion, the predetermined angle being less than 180°; and the space between the first support portion and the second support portion faces the first drive gear.

The following may be provided: the main gear comprises a first gear section and a second gear section arranged coaxially, the first and second gear sections are configured to rotate simultaneously; the first gear section is connected to and driven by the motor; and the second gear section is engaged with the planetary gear.

The following may be provided: the motor gearbox further comprises a plugging protection mechanism; and the plugging protection mechanism comprises a first protection gear connected to and driven by the motor; a second protective gear arranged coaxially with the first protective gear, the second protective gear is connected to and driven by the gearbox output shaft; and a protective resilient device clamped between the first protective gear and the second protective gear, the protective resilient device being in a compressed state.

For the motor gearbox, the following may be provided: the motor gearbox further comprises a second drive gear disposed on the gearbox output shaft; the second drive gear is fixed with respect to the gearbox output shaft; and the second drive gear is connected to the planetary gear.

The motor gearbox may further comprise a worm connected to an output end of the motor, and a third drive gear connected to the worm and the main gear.

In an example, a motor gearbox may be provided, comprising a housing; a motor disposed in the housing; a gearbox output shaft disposed in the housing; a first protection gear connected to and driven by the motor; a second protective gear arranged coaxially to the first protective gear, the second protective gear being driven by and connected to the gearbox output shaft; and a protective resilient device clamped between the first and second protective gears, wherein the protective resilient device is in a compressed state.

The motor gearbox may further comprise a protective gear shaft assembly configured to snap the first and second protective gears, wherein a fixed projection is provided on an outer periphery of the protective gear shaft assembly, and the fixed projection is attached to a surface of the first protective gear facing away from the second protective gear, or the fixed projection is configured to abut against a surface of the second protective gear facing away from the first protective gear.

The following may be provided: the first protective gear is provided with a first mounting slot on the surface of the first protective gear facing away from the second protective gear; the second protective gear is provided with a second mounting slot on a surface of the second protective gear facing away from the first protective gear; and the fixed projection is embedded in the first mounting slot or the second mounting slot.

The motor gearbox may further comprise: a protective gear shaft assembly configured to snap the first and second protective gears, wherein the protective gear shaft assembly is provided with a fixing groove; a retaining spacer in the fixing groove, wherein the retaining spacer abuts against the surface of the first protective gear facing away from the second protective gear, or the retaining spacer abuts against the surface of the second protective gear facing away from the first protective gear.

The following may be provided: the first protective gear is provided with a third mounting slot on the surface of the first protective gear facing away from the second protective gear, the retaining spacer being embedded in the third mounting slot; or the second protective gear is provided with a fourth mounting groove on a surface of the second protective gear facing away from said first protective gear.

The retaining spacer may be disc-shaped.

The motor gearbox may further comprise a protective gear shaft disposed in the housing; and a fixed sleeve disposed on the protective gear shaft; wherein the first and second protective gears are both disposed on the fixed sleeve, and the fixed sleeve is provided with a fixed projection or a fixing groove on an outer periphery of the fixed sleeve.

The motor gearbox may further comprise a main gear and a planetary gear meshed with each other, wherein: the planetary gear is configured to move in a circumferential direction of the main gear in response to the main gear rotating; the main gear is driven by and connected to the motor; and the planetary gear is selectively driven by and connected to the first protective gear when the main gear is driven to rotate.

The motor gearbox may further comprise a first drive gear, wherein the planetary gear is driven by and connected to the first protective gear through the first drive gear.

In another example, a motor gearbox may be provided, comprising a housing; a motor disposed in the housing; a main gear connected to the motor; and a first planetary gear and a second planetary gear spaced apart from each other along a circumference of the main gear, wherein in response to the main gear rotating, the first planetary gear and the second planetary gear are configured to move in a circumferential direction of the main gear.

The motor gearbox may further comprise a clutch resilient device clamped between the first planetary gear and a support, wherein the clutch resilient device is in a compressed state.

### Brief description of drawings

The accompanying drawings are used to provide further understanding of the embodiments of this application and form part of the specification and, together with the embodiments of this application, are used to explain this application and do not constitute a limitation of this application. In the accompanying drawings, same reference marks usually represent same parts or steps.
- Fig. 1: is a structural diagram of a motor gearbox according to an embodiment of the current application.
- Fig. 2: is a structural diagram of another view of the motor gearbox shown in Fig. 1.
- Fig. 3: is a structural diagram of an example clutch mechanism.
- Fig. 4: is a structural diagram of a clutch mechanism and a first transmission gear according to an embodiment of the current application.
- Fig. 5: is a structural diagram of a blocking protection mechanism according to an embodiment of the current application.
- Fig. 6: is a cross-sectional diagram in C-C direction of the blocking protection mechanism shown in Fig. 5.

### Detailed description of preferred embodiments

In order to make the object, technical solutions and advantages of the present application more apparent, the following exemplary embodiments according to the present application will be described in detail with reference to the accompanying drawings. It is clear that the described embodiments are only a portion of the embodiments of the present application and not all of the embodiments of the present application, and it should be understood that the present application is not limited by the example embodiments described herein. Based on the embodiments of this application described in this application, all other embodiments obtained by a person skilled in the art without creative labor shall fall within the scope of protection of this application.

To improve the smoothness of the gear clutch mechanism in a motor gearbox, the present application provides a motor gearbox. The motor gearbox includes a motor gearbox comprising: a housing, a motor disposed in the housing, a gearbox output shaft disposed in the housing; and a clutch mechanism comprising a main gear and a planetary gear meshing with the main gear. The main gear is connected and driven by the motor, and the planetary gear is selectively connected to the gearbox output shaft when the motor drives the main gear to rotate, when the main gear is rotating, the planetary gear moves in a circumferential direction of the main gear. The details are explained below.

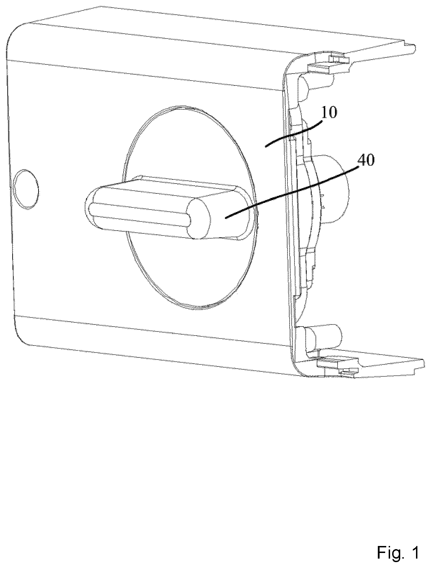

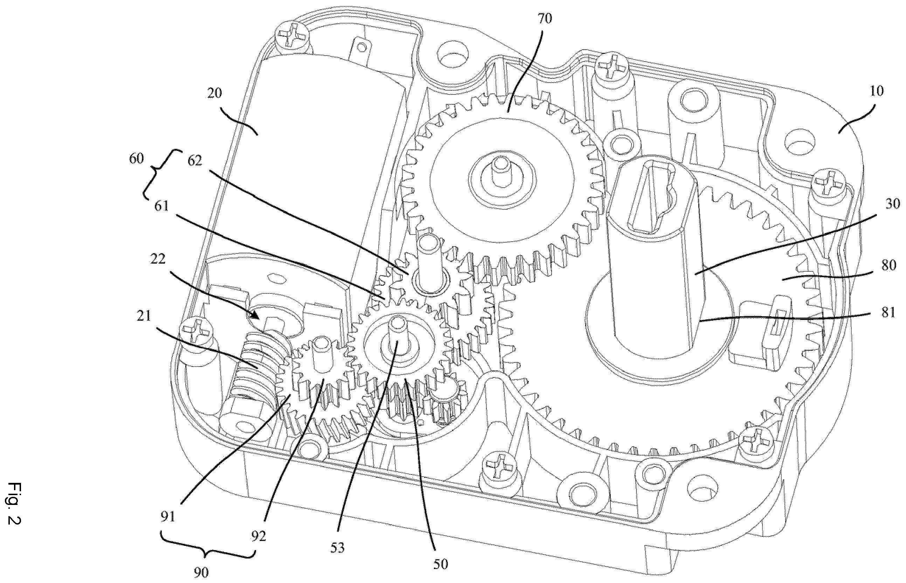

Fig. 1 is a structural diagram of a motor gearbox according to an embodiment of the current application, and Fig. 2 is a structural diagram of another view of the motor gearbox shown in Fig. 1.

The motor gearbox described in this application may be used in or associated with products such as smart door locks. For example, the gearbox may be applied to drive a smart door lock (e.g., a dull lock) to lock and/or unlock the lock. The motor gearbox might not be used in only smart door locks, and the usage of the motor gearbox is not be limited herein.

The motor gearbox may include a housing 10, a motor 20 and a gearbox output shaft 30. The motor 20 and the gearbox output shaft 30 may be positioned in the housing 10. The gearbox output shaft 30 may be connected to a latch, and the latch may be moved by the rotation of the gearbox output shaft 30 around its own central axis to lock and unlock the lock. It is understood that the rotation of the gearbox output shaft 30 may be in an opposite direction during the opening and closing process.

The motor 20 may be connected to the gearbox output shaft 30 to drive the gearbox output shaft 30 rotation. For example, for a smart door lock, the motor 20 may drive to lock and unlock the lock and complete full automation of the smart door lock for the convenience of the user. A smart door lock is usually provided with the function to open and close the lock by hand, e.g., not driven by the motor 20. For example, the motor gearbox may also include a knob 40 snapped to the gear box output shaft 30. The knob 40 may be relatively fixed to the gear box output shaft 30. The user can lock and/or unlock the lock by turning the knob 40 to drive the gear box output shaft 30 rotation.

Referring to Fig. 2, in an embodiment, when the user needs to use a knob (e.g., the knob 40) to open and close the lock, it may be necessary to remove the transmission connection between the motor 20 and the gearbox output shaft 30, so that the user can turn the knob and drive the gearbox output shaft 30. The reason is that if the user uses the knob to open and close the lock, while the motor 20 and the gearbox output shaft 30 still maintain the transmission connection, a helical gear may be more difficult to drive the motor output worm reverse rotation and drive the motor 20 reverse resistance due to the self-locking effect between the motor output worm and helical gear meshing with each other. As a result, if the knob is used to open and close the lock, it may be necessary to eliminate the transmission connection between the motor 20 and the gearbox output shaft 30.

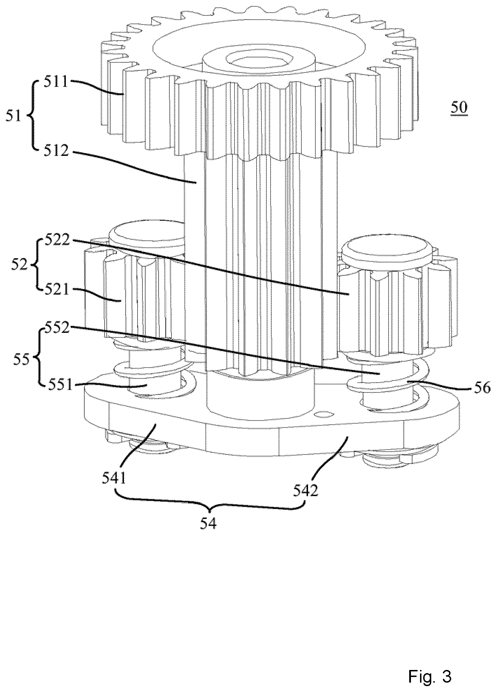

Fig. 3 is a structural diagram of a clutch mechanism according to an embodiment of the current application.

A motor gearbox may comprise a clutch mechanism 50 for selectively disconnecting the motor 20 and the gearbox output shaft 30. The clutch mechanism 50 may comprise a main gear 51 and a planetary gear 52 engaged with (e.g., meshed with) each other. The planetary gear 52 may be capable of moving in a circumferential direction of the main gear 51 in response to rotation of the main gear 51. The main gear 51 may be connected to and driven by the motor 20. For example, the main gear 51 may be rotated by the motor 20 to enable the planetary gear 52 to be selectively connected to the gearbox output shaft 30, which enables the gearbox output shaft 30 to rotate.

The planetary gear 52 may be capable of selectively connecting to the gearbox output shaft 30 during the rotation of the main gear 51 by the motor 20. The planetary gear 52 may be engaged with the main gear 51, and the planetary gear 52 may be capable of rotating around the main gear 51 while moving along the circumference of the main gear 51. The planetary gear 52 may be connected to the gearbox output shaft 30 with the movement of the planetary gear 52 in the circumferential direction of the main gear 51, at which time the motor 20 may establish a transmission connection with the gearbox output shaft 30 in order to open and close the lock by means of the motor 20; the planetary gear 52 can also be separated from the gearbox output shaft 30 with the movement of the planetary gear 52 in the circumferential direction of the main gear 51, at which time the motor 20 and the gearbox output shaft 30 might not be connected to each other. The planetary gear 52 can also be separated from the gearbox output shaft 30 as it moves along the circumference of the main gear 51.

The clutch mechanism 50 may provide a smoother clutching process, and the planetary gear 52 can complete the clutching process smoothly with the gearbox output shaft 30, which can improve the smoothness of the gear clutching process.

Referring further to Figs. 2 and 3, the clutch mechanism 50 may comprise a main gear shaft 53 provided in the housing 10. The main gear 51 may be provided on and rotatably connected to the main gear shaft 53, so that the main gear 51 is capable of rotating relative to the main gear shaft 53. The clutch mechanism 50 may comprise a support member 54 and a planetary gear shaft 55. The support member 54 may be rotatably connected to the main gear shaft 53, e.g., other parts of the support member 54 can rotate around the joint part of the support member 54 and the main gear shaft 53. The planetary gear shaft 55 may be provided on the support member 54, and the planetary gear 52 may be rotatably disposed on the planetary gear shaft 55.

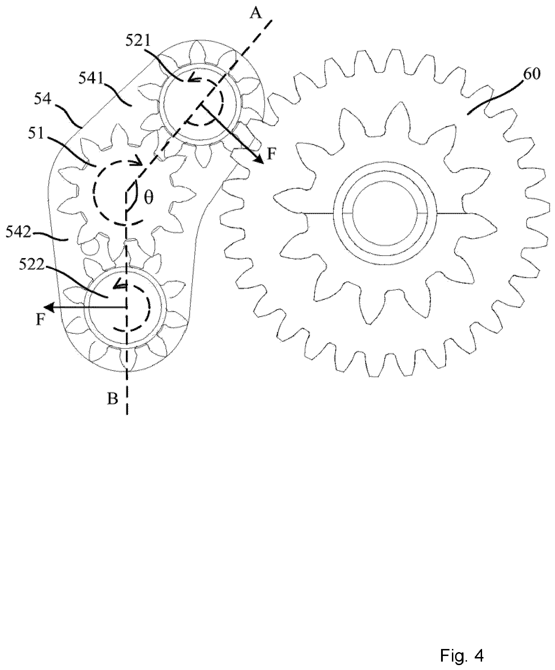

The main gear 51 and the planetary gear 52 may engage with each other, when the motor 20 drives the main gear 51 to rotate, the main gear 51 may apply a certain magnitude of torque to the planetary gear 52. For example, Fig. 4 shows that the main gear 51 may apply torque to the first planetary gear 521 and the second planetary gear 522 respectively. When the planetary gear 52 is driven along the circumferential direction, the main gear 51 may engage with the planetary gear 52. The support member 54 may be rotatably connected to the main gear shaft 53, so that the planetary gear 52 is able to move along the circumference of the main gear 51, and the support member 54 is able to swing with the movement of the planetary gear 52 along the circumference of the main gear 51.

Referring to Figs. 3 and 4, Fig. 4 is a structural diagram of a clutch mechanism and a first driving gear in an engaged state.

The gearbox output shaft 30 could rotate forward and reverse to match the action of opening and closing the lock. If the clutch mechanism 50 includes only one planetary gear 52, when the motor 20 needs to switch from forward rotation to reverse rotation, the main gear 51 may need to reverse the rotation direction and cause the planetary gear 52 to move a larger stroke along the circumference of the main gear 51 before reconnecting to the gearbox output shaft 30.

To solve this problem, the planetary gear 52 may comprise a first planetary gear 521 and a second planetary gear 522 spaced apart from each other along the circumference of the main gear 51. When the main gear 51 is rotated in the first rotational direction, the first planetary gear 521 may connect to the gearbox output shaft 30. When the main gear 51 is rotated in the second rotational direction, the second planetary gear 522 may connect to the gearbox output shaft 30. The first rotation direction and the second rotation direction may be opposite, e.g., clockwise and counterclockwise.

As shown in Fig. 2 and Fig. 4, when the motor 20 drives the main gear 51 to rotate in the first rotational direction, e.g., clockwise direction, the main gear 51 may apply a torque to the first planetary gear 521 and the second planetary gear 522 respectively, e.g., the force of the torque shown as F in Fig. 4. The distance between the main gear 51 and the planetary gear 52 is the force arm, so that both the first planetary gear 521 and the second planetary gear 522 may move along the circumference of the main gear 51 in a same direction. The first planetary gear 521 may be connected to and driven by the gearbox output shaft 30, while the second planetary gear 522 is disconnected to the gearbox output shaft 30. Similarly, when the motor 20 drives the main gear 51 to rotate in the second rotation direction, both the first planetary gear 521 and the second planetary gear 522 may move along the circumferential direction of the main gear 51 in a same direction. The movements of the first planetary gear 521 and the second planetary gear 522 may be opposite to the previous case (e.g., when the motor 20 drives the main gear 51 to rotate in the first rotational direction). The main gear 51, the first planetary gear 521, and the second planetary gear 522 may rotate opposite to the previous case. The second planetary gear 522 may be connected to and driven by the gearbox output shaft 30, while the first planetary gear 521 is disconnected to the gearbox output shaft 30.

If the motor 20 is running reversely, the connection between the motor 20 and the gearbox output shaft 30 can be reestablished quickly by the first planetary gear 521 and the second planetary gear 522, which improves the operation efficiency of the motor gearbox. The movement along the circumference of the main gear when the motor 20 is running reversely may be avoided as well.

Further, the first planetary gear 521 and the second planetary gear 522 may be rotatably disposed on a planetary gear shaft 55 respectively. The planetary gear shaft 55 may comprise a first planetary gear shaft 551 and a second planetary gear shaft 552. The first planetary gear 521 may be disposed on the support member 54 via the first planetary gear shaft 551, and the second planetary gear 522 may be disposed on the support member 54 via the second planetary via the second planetary gear shaft 552.

The support member 54 may comprise a first support portion 541 and a second support portion 542 connected at ends proximate to each other. The joint of the first support portion 541 and the second support portion 542 may be rotatably connected to the main gear shaft 53. The first support portion 541 may support the first planetary gear 521 and the second support portion 542 may support the second planetary gear 522.

The motor gearbox also may comprise a first driving gear 60, and the first and second planetary gears 521 and 522 may be connected to the gearbox output shaft 30 via the first driving gear 60. The second planetary gear 522 may be disconnected from the gearbox output shaft 30 when the first planetary gear 521 is connected to the gearbox output shaft 30. When the second planetary gear 522 is connected to the gearbox output shaft 30, the first planetary gear 521 may be disconnected from the gearbox output shaft 30.

An extension direction of the first support portion 541 (shown by a broken line A in Fig. 4) and an extension direction of the second support portion 542 (shown by the dashed line B in Fig. 4) may be set at a predetermined angle θ, which is less than 180°. The support member 54 may be constructed similar to a boomerang as shown in Fig. 4. The space formed by the recess of the support member 54 may be oriented toward the first driving gear 60.

The first support portion 541 and the second support portion 542 may both extend close to the first driving gear 60, so that the distance between the planetary gear 52 and the first driving gear 60 may be reduced. As a result, the distance that the first planetary gear 521 needs to move to reconnect with the first driving gear 60 may be reduced, and the distance that the second planetary gear 522 needs to move to reconnect with the first driving gear 60 may also be reduced, thus the operating efficiency of the motor gearbox is increased.

Referring to Fig. 3, the clutch mechanism 50 may comprise a clutch resilient member 56 (e.g., a clutch elastic device) interposed between the planetary gear 52 and the support member 54. The clutch resilient member 56 may be in a compressed state. The clutch resilient member 56 may have a resilient restoring force against the planetary gear 52 and a frictional resistance between the clutch resilient member 56 and the planetary gear 52.

During the rotation of the planetary gear 52, the friction of the clutch resilient member 56 may apply a damping force to the planetary gear 52 to ensure that the planetary gear 52 operates stably. Moreover, when the motor gearbox is not working, the planetary gear 52 is disconnected with the gearbox output shaft 30, and the friction provided by the clutch elastic member 56 can stop the planetary gear 52 from rotating, and prevent the planetary gear 52 from connecting with the gearbox output shaft 30, which ensures stable operation of the motor gearbox.

The clutch resilient member 56 can be a spring or other resilient member. It is understood that one end of the planetary gear shaft 55 may rest on the side of the planetary gear 52 away from the support member 54, and the other end of the planetary gear shaft 55 may pass through the support member 54 and may be restrained by a spring on the side of the support member 54 away from the planetary gear 52, so that the planetary gear 52 and the support member 54 are not separate under the elastic restoring force of the clutching resilient member 56.

Referring further to Figs. 2 and 3, the main gear 51 may comprise a first gear section 511 and a second gear section 512, which are coaxially arranged and can rotate synchronously. For example,, the main gear 51 may be a duplex gear. The first gear section 511 of the main gear 51 may be connected to the motor 20, and the second gear section 512 may engage with the planetary gear 52.

The tooth profiles or types of the first gear section 511, the second gear section 512, and/or the planetary gear 52 may be straight teeth.

The motor 20, after driving the motor gearbox to open or close, may be reversed, to some extent, to eliminate (e.g., cancel, stop) the connection between the planetary gear 52 and the gearbox output shaft 30. For example, neither the first planetary gear 521 nor the second planetary gear 522 may be connected to the gearbox output shaft 30, so that the user could open and close the lock mechanically when the motor 20 is not operating, such as the a knob.

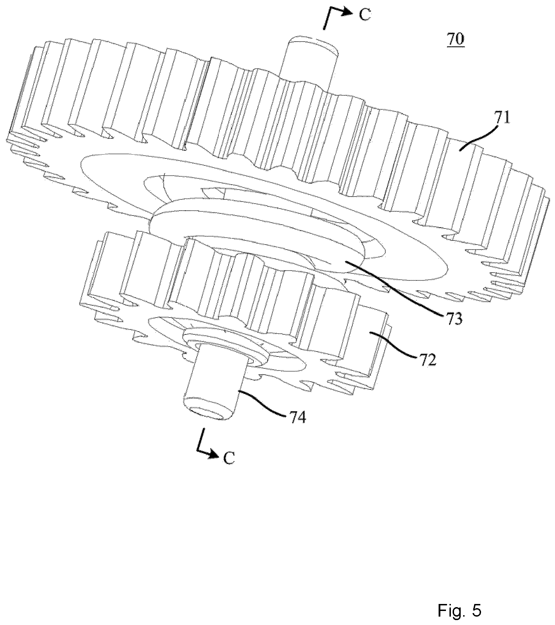

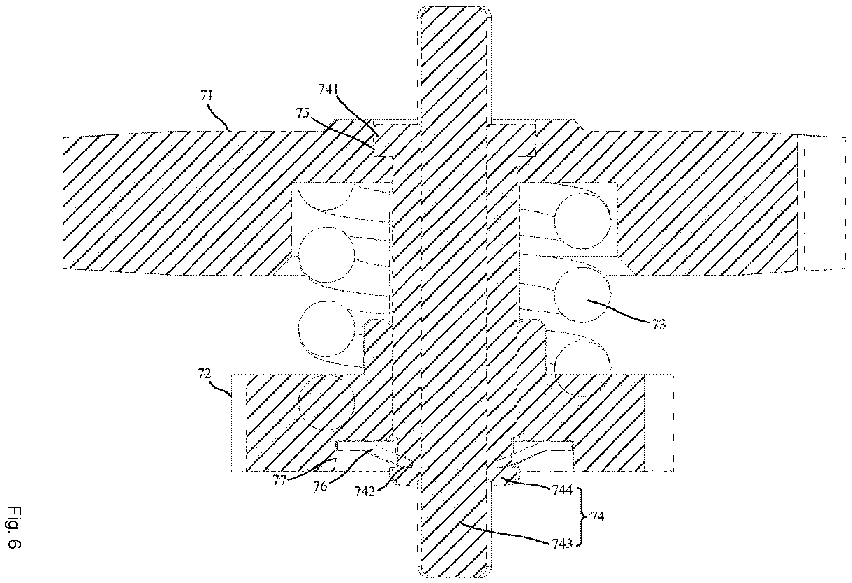

Referring to Fig. 2, Fig. 5, and Fig. 6, Fig. 5 is a structural diagram of a blocking protection mechanism according to an embodiment of the current application. Fig. 6 is a cross-sectional diagram alone C-C direction of the blocking protection mechanism shown in Fig. 5.

Currently, the motor gearbox of the smart lock on the market has no protection mechanism for the motor, and the motor is prone to blocking rotation. When the motor is blocked, the motor will be subjected to excessive torque and damage, which will shorten the service life of the motor, and further damage the battery life of the smart door lock.

In view of this, the motor gearbox of the present application may comprise a plugging protection mechanism 70, which may comprise a first protective gear 71, a second protective gear 72, and a protective elastic member 73. The first protective gear 71 may be connected to the motor 20, the second protective gear 72 may be connected to the gearbox output shaft 30, and the protective elastic member 73 may be sandwiched between the first protective gear 71 and the second protective gear 72. The protective elastic member 73 may be compressed.

The protective elastic member 73 may be in direct contact with the first protective gear 71 and the second protective gear 72 respectively. The protective elastic member 73 may apply a certain frictional force to the first protective gear 71 and the second protective gear 72 respectively. In this way, when the torque of the gearbox output shaft 30 is less than or equal to the torque threshold, the protective elastic member 73 may provide friction to make the first protective gear 71 and the second protective gear 72 rotate synchronously to ensure that the gearbox output shaft 30 is driven to rotate by the motor 20. When the torque of the gearbox output shaft 30 is greater than the torque threshold, the friction provided by the protective elastic member 73 might not be sufficient to maintain the synchronous rotation between the first protective gear 71 and the second protective gear 72. In that case, the first protective gear 71 and the second protective gear 72 may also slip and rotate relative to each other rather than rotating synchronously, so that the motor 20 can be prevented from being subjected to excessive torque impact,. In this way, the service life of the motor 20 can be extended.

Further, the power consumption of the motor 20 may increase significantly when the motor 20 is blocked. The reduced risk of blockage of motor 20 indicates that the smart door lock of this application has an improved battery life.

The torque threshold may be the maximum torque that the gearbox output shaft 30 is allowed to have when the first protective gear 71 and the second protective gear 72 are rotating synchronously with each other. When the torque of the gearbox output shaft 30 is greater than the torque threshold, the first protective gear 71 and the second protective gear 72 may slip and rotate relative to each other and no longer rotate synchronously.

The plugging protection mechanism 70 may comprise a protective gear shaft assembly 74. Both the first protective gear 71 and the second protective gear 72 may be disposed on the protective gear shaft assembly 74. The outer periphery of the protective gear shaft assembly 74 may be convexly provided with a fixed projection 741 that abuts the surface of the first protective gear 71 away from the second protective gear 72 and/or the fixed projection 741. The fixed projection 741 may be attached to the surface of the second protective gear 72 away from the first protective gear 71 such that the first protective gear 71 and the second protective gear 72 grip the protective resilient member 73.

Further, the surface of the first protective gear 71 facing away from the second protective gear 72 and/or the surface of the second protective gear 72 facing away from the first protective gear 71 may be provided with a first mounting slot 75, and the fixing projection 741 may be embedded in the first mounting slot 75. The thickness of the plugging protection mechanism 70 may be reduced by this way and may make the structure more compact, thus the motor gearbox can be miniaturized.

The plugging protection mechanism 70 may comprise a protective gear shaft assembly 74 and a retaining shim 76. Both the first protective gear 71 and the second protective gear 72 may be disposed on the protective gear shaft assembly 74. The outer peripheral surface of the protective gear shaft assembly 74 may also be provided with a retaining slot 742. The retaining shim 76 may be disposed in the retaining slot 742. The retaining shim 76 may abut the surface of the first protective gear 71 facing away from the second protective gear 72, and/or the retaining shim 76 may be attached to the surface of the second protective gear 72 away from the first protective gear 71, such that the first protective gear 71 and the second protective gear 72 may grip the protective resilient member 73.

Further, the surface of the first protective gear 71 facing away from the second protective gear 72 and/or the surface of the second protective gear 72 facing away from the first protective gear 71 may be provided with a second mounting slot 77, and the retaining shim 76 may be embedded in the second mounting slot 77. In this way, the thickness of the entire plugging protection mechanism 70 may be reduced, making the structure more compact and thus facilitating the miniaturization of the motor gearbox.

For example, as shown in Figs. 5 and 6, to facilitate assembly of the plugging protection mechanism 70, the protective gear shaft assembly 74 may be provided with a retaining projection 741 at one end and a retaining slot 742 at the other end. For example, the retaining protrusion 741 may be attached to the surface of the first protective gear 71 away from the second protective gear 72, and the retaining shim 76 may be stuck in the fixing slot 742 and may be attached to the surface of the second protective gear 72 away from the first protective gear 71.

In this way, the first protective gear 71, the protective resilient member 73, and the second protective gear 72 can be mounted to the protective gear shaft assembly 74 in sequence from the end of the protective gear shaft assembly 74. A retaining spacer 76 may be seated in the retaining slot 742 to fix the first protective gear 71, the protective resilient member 73, and the second protective gear 72, so that the first protective gear 71 and the second protective gear 72 grip the protective resilient member 73.

The first mounting slot 75 may be provided on the surface of the first protective gear 71 facing away from the second protective gear 72, and the second mounting slot 77 may be provided on the surface of the second protective gear 72 facing away from the first protective gear 71.

The retaining shim 76 can be a disc shim, etc. The protective resilient member 73 can be a spring, etc., and the protective resilient member 73 may be disposed on the protective gear shaft assembly 74 and may abut the first protective gear 71 at one end and the second protective gear 72 at the other end.

In an embodiment, the protective gear shaft assembly 74 may comprise a protective gear shaft 743 and a fixed shaft sleeve 744. The protective gear shaft 743 may be provided in the housing 10, the fixed shaft sleeve 744 may be provided in the protective gear shaft 743, and both the first protective gear 71 and the second protective gear 72 may be provided in the fixed shaft sleeve 744. The protective gear shaft 743 and the fixed shaft sleeve 744 may be fixed to each other.

The outer periphery of the fixed sleeve 744 may be convexly provided with a fixing projection 741 and/or the outer periphery of the fixed sleeve 744 may be provided with a fixing slot 742, as shown in Fig. 6. The protective gear shaft assembly 74 may be provided with a securing projection 741 at one end and a securing slot 742 at the other end. The securing sleeve 744 may be provided with a securing projection 741 at one end and a securing slot 742 at the other end.

Referring to Figs. 2 through 6, the first protective gear 71 may be coupled to the motor 20 via a planetary gear 52 of the clutch mechanism 50. As described above, the motor gearbox may comprise a first driving gear 60, and the planetary gear 52 may be connected to the first protective gear 71 via the first driving gear 60.

As shown in Fig. 2, the first driving gear 60 may comprise a third gear section 61 and a fourth gear section 62 arranged coaxially and rotated synchronously. The first driving gear 60 may be a duplex gear. The third gear section 61 of the first driving gear 60 may engage with the planetary gear 52 of the clutch mechanism 50, and the fourth gear section 62 may engage with the first protective gear 71.

The teeth profiles or types of both the third gear section 61 and the fourth gear section 62 may be straight teeth.

In an embodiment, the motor gearbox further comprises a second driving gear 80 provided on and fixed to the output shaft 30 of the gearbox. The second driving gear 80 engages with the second protective gear 72 which can drive the second protective gear 72 to rotate, then drives the output shaft 30 of the gearbox. Fig. 2 shows that the second driving gear 80 is provided with a non-circular irregular through-hole 81 through which the gearbox output shaft 30 passes and the shape of the two matches, so that the second driving gear 80 and the gearbox output shaft 30 snap together and fix to each other.

The motor gearbox may comprise a worm 21 (e.g., a worm gear, worm drive) and a third driving gear 90. The worm 21 may be connected to the output 22 of the motor 20 and main gear 51 through the third driving gear 90. The motor 20 may drive the main gear 51 of the clutch mechanism 50 through the worm 21, which drives the entire motor gearbox.

As shown in Fig. 2, the third driving gear 90 may comprise a fifth gear section 91 and a sixth gear section 92 arranged coaxially and rotate simultaneously. The third driving gear 90 may be a duplex gear. The fifth gear section 91 may have helical teeth and may engage with the worm gear 21 to convert the rotation of the output end of the motor 20. The sixth gear section 92 may engage with the main gear 51, specifically with the first gear section 511 of the main gear 51.

The tooth profile or type of the sixth gear section 92 may be straight teeth.

The following is a general description of the working process of the motor gearbox.

When the lock is opened by the motor 20, the motor 20 may drive the worm 21 to rotate and may cause the third driving gear 90 to rotate (e.g., rotate clockwise). Afterwards, the main gear 51 of the clutch mechanism 50 may be driven to rotate (e.g., rotate counterclockwise), causing the first planetary gear 521 to move along the circumference of the main gear 51 until it engages with the first driving gear 60 and drives the first driving gear 60 to rotate (e.g., rotate counterclockwise). After that, the first transmission gear 60 may drive the first protective gear 71 and the second protective gear 72 to rotate (e.g., rotate clockwise). After that, the second protective gear 72 may drive the second transmission gear 80 to rotate counterclockwise, and then drive the gearbox output shaft 30 to rotate, completing one of the actions of opening or closing the lock.

When the lock is closed by the motor 20, the second planetary gear 522 may be engaged with the first driving gear 60, and the rotation of each gear may be in the opposite direction to that described above, which will not be repeated here.

If the torque of the output shaft 30 of the gear box is too large when opening or closing the lock, the first protective gear 71 and the second protective gear 72 may slip and rotate relative to each other and no longer rotate synchronously, so that it can prevent the motor 20 from being subjected to excessive torque impact, and ensure the stability of the motor 20 and extend the service life of the motor 20.

It should be noted that the above embodiments illustrate the present application and do not limit it, and that a person skilled in the art may devise alternative embodiments without departing from the scope of the appended claims. Any reference symbols located between the brackets in the claim should not be constructed as a limitation of the claim. The word "comprising" does not exclude the presence of an element or step not listed in the claim. The word "one" or "one" before the component does not exclude the existence of multiple such components. This application can be implemented with the help of hardware including a number of different components and with the help of a computer appropriately programmed. In unit claims where several devices are listed, several of these devices may be specifically embodied by the same hardware item. The use of the words first, second, and third does not indicate any order. The words can be interpreted as names.

The above mentioned is only a specific implementation or a description of a specific implementation of this application. The scope of protection of this application is not limited to this, and any person skilled in the art can easily think of variations or substitutions within the technical scope disclosed in this application, which should be covered by the scope of protection of this application. The scope of protection of this application shall be subject to the scope of protection of the claims.

## Claims

1. A motor gearbox, comprising:
- a housing;
- a motor disposed in the housing;
- a main gear connected to the motor; and
- a first planetary gear and a second planetary gear spaced apart from each other along a circumference of the main gear;
wherein in response to the main gear rotating, the first planetary gear and the second planetary gear are configured to move in a circumferential direction of the main gear.

2. The motor gearbox according to claim 1, wherein
- the first planetary gear and a second planetary gear spaced apart from each other along a circumferential direction of the main gear;
- when the main gear is rotated in a first rotational direction, the first planetary gear is connected to the gearbox output shaft; and
- when the main gear is rotated in a second rotational direction opposite to the first rotation direction, the second planetary gear is connected to the gearbox output shaft.

3. The motor gearbox according to claim 2, further comprising
- a main gear shaft configured to set the main gear;
- a support rotatably connected to the main gear shaft; and
- a planetary gear shaft configured to set the planetary gear, wherein
- the planetary gear shaft is provided on the support, and the planetary gear is rotatable with respect to the planetary gear shaft.

4. The motor gearbox according to claim 2 or 3, further comprising
- a clutch resilient device clamped between the planetary gear and the support, wherein the clutch resilient device is in a compressed state.

5. The motor gearbox according to at least one of claims 2 to 4, wherein
- the support comprises an interconnected first support portion and a second support portion, the first and second support portions are rotatably connected to the main gear shaft;
- the planetary gear comprises a first planetary gear and a second planetary gear spaced apart from each other along the circumference of the main gear; the first planetary gear is provided in the first support portion; and
- the second planetary gear is provided in the second support portion.

6. The motor gearbox according to claim 5, wherein
- the motor gearbox comprises a first drive gear, the first planetary gear and the second planetary gear are connected by the first drive gear and the gearbox output shaft;
- the first support portion is set at a predetermined angle between an extending direction of the first support portion and an extending direction of the second support portion, the predetermined angle being less than 180°; and
- the space between the first support portion and the second support portion faces the first drive gear.

7. The motor gearbox according to at least one of claims 2 to 6, wherein:
- the main gear comprises a first gear section and a second gear section arranged coaxially, the first and second gear sections are configured to rotate simultaneously; the first gear section is connected to and driven by the motor; and
- the second gear section is engaged with the planetary gear.

8. The motor gearbox according to at least one of claims 2 to 7, wherein
- the motor gearbox further comprises a plugging protection mechanism; and
- the plugging protection mechanism comprises:
- a first protection gear connected to and driven by the motor;
- a second protective gear arranged coaxially with the first protective gear, the second protective gear is connected to and driven by the gearbox output shaft; and
- a protective resilient device clamped between the first protective gear and the second protective gear, the protective resilient device being in a compressed state.

9. The motor gearbox according to at least one of claims 2 to 8, wherein
- the motor gearbox further comprises a second drive gear disposed on the gearbox output shaft;
- the second drive gear is fixed with respect to the gearbox output shaft; and
- the second drive gear is connected to the planetary gear.

10. The motor gearbox according to at least one of claims 2 to 9, further comprising
- a worm connected to an output end of the motor; and
- a third drive gear connected to the worm and the main gear.

11. A motor gearbox, comprising
- a housing;
- a motor disposed in the housing;
- a gearbox output shaft disposed in the housing; a first protection gear connected to and driven by the motor;
- a second protective gear arranged coaxially to the first protective gear, the second protective gear being driven by and connected to the gearbox output shaft; and
- a protective resilient device clamped between the first and second protective gears, wherein the protective resilient device is in a compressed state.

12. The motor gearbox according to claim 11, further comprising
- a protective gear shaft assembly configured to snap the first and second protective gears, wherein
- a fixed projection is provided on an outer periphery of the protective gear shaft assembly, and the fixed projection is attached to a surface of the first protective gear facing away from the second protective gear; or
- the fixed projection is configured to abut against a surface of the second protective gear facing away from the first protective gear.

13. The motor gearbox according to claim 11 or 12, wherein
- the first protective gear is provided with a first mounting slot on the surface of the first protective gear facing away from the second protective gear;
- the second protective gear is provided with a second mounting slot on a surface of the second protective gear facing away from the first protective gear; and
- the fixed projection is embedded in the first mounting slot or the second mounting slot.

14. The motor gearbox according to claim 13, further comprising
- a protective gear shaft assembly configured to snap the first and second protective gears, wherein the protective gear shaft assembly is provided with a fixing groove;
- a retaining spacer in the fixing groove, wherein:
- the retaining spacer abuts against the surface of the first protective gear facing away from the second protective gear; or
- the retaining spacer abuts against the surface of the second protective gear facing away from the first protective gear.

15. The motor gearbox according to claim 14, wherein
- the first protective gear is provided with a third mounting slot on the surface of the first protective gear facing away from the second protective gear, the retaining spacer being embedded in the third mounting slot; or
- the second protective gear is provided with a fourth mounting groove on a surface of the second protective gear facing away from said first protective gear.
